# EUROPEAN PATENT APPLICATION

(11) **EP 4 819 722 A1**
(43) Date of publication of application: **07.10.2026**
(21) Application number: 24906257.1
(22) Date of filing: 13.12.2024
(51) Int. Cl.: H04W 72/0446

(54) **COMMUNICATION METHOD AND APPARATUS**

(30) Priority: 20.12.2023 CN 202311763656
(71) Applicant: Huawei Technologies Co., Ltd., Shenzhen, Guangdong 518129 (CN)
(72) Inventor: PANG, Xu, Shenzhen, Guangdong 518129 (CN); CAO, Youlong, Shenzhen, Guangdong 518129 (CN); XU, Rui, Shenzhen, Guangdong 518129 (CN); FU, Yu, Shenzhen, Guangdong 518129 (CN); QIN, Yi, Shenzhen, Guangdong 518129 (CN)
(74) Representative: Huawei European IPR
(86) International application number: PCT/CN2024/139154
(87) International publication number: WO 2025/130776

(57) **Abstract**

A communication method and apparatus are provided. The method includes: A first apparatus may receive configuration information, where the configuration information is used to configure at least one time period for performing measurement. The first apparatus may determine a remaining delay for transmitting first data, and transmit the first data and/or perform measurement in a first time period based on the remaining delay. The first time period may be an overlapping part of a second time period and a third time period, the second time period is one of the at least one time period, the third time period is a time period corresponding to a time domain position of a first resource, and the first resource is a scheduled or configured resource used for transmitting the first data. According to the method, when the time period used for measurement overlaps with the time domain position of the resource used for transmitting the first data, the first apparatus may transmit the first data and/or perform measurement in the overlapping time period based on the remaining delay for transmitting the first data, thereby avoiding or reducing impact on transmission of the first data, and improving service reliability.

## Description

### CROSS-REFERENCE TO RELATED APPLICATIONS

This application claims priority to Chinese Patent Application No. 202311763656.4, filed with the China National Intellectual Property Administration on December 20, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With the continuous development of wireless communication systems, data transmission latency is steadily reduced, and transmission capacities are increasing. The wireless communication systems are gradually supporting services with stringent real-time requirements and large data volumes, such as video transmission, cloud gaming (cloud gaming, CG), and extended reality (extended reality, XR). XR refers to an environment, created by computer technologies and wearable devices, that combines real and virtual elements and allows human-computer interaction. XR is a collective term encompassing various forms such as augmented reality (augmented reality, AR), virtual reality (virtual reality, VR), and mixed reality (mixed reality, MR).

Taking XR services as an example, data frames of XR services may be transmitted between an access network device and a terminal using semi-persistent scheduling. For example, the access network device may configure a plurality of resources for the terminal to transmit a single data frame. The time domain positions of the resources configured by the access network device for transmitting data frames may overlap with a time period used for terminal measurement (for example, a measurement gap (measurement gap, MG)). If the time period used for terminal measurement cannot be used for sending and receiving data, the terminal may measure signals from neighboring cells during the overlapping time period, but will not send or receive data. Consequently, this affects data transmission and reduces service reliability.

### SUMMARY

This application provides a communication method and apparatus to improve service reliability.

**According to a first aspect**, an embodiment of this application provides a communication method. The method may be applied to a first apparatus. The first apparatus may be a terminal or a module (for example, a circuit, a chip, a chip system, or a processor) in the terminal, or may be a logical node, a logical module, or software that can implement all or a part of functions of the terminal. The method may include: The first apparatus may receive configuration information. The configuration information may be used to configure at least one time period for performing measurement. After determining a remaining delay for transmitting first data, the first apparatus may transmit the first data and/or perform measurement in a first time period based on the remaining delay. The first time period may be an overlapping part of a second time period and a third time period, the second time period is one of the at least one time period, the third time period is a time period corresponding to a time domain position of a first resource, and the first resource is a scheduled or configured resource used for transmitting the first data.

According to the method, when the time period used for measurement overlaps with the time domain position of the resource used for transmitting the first data, the first apparatus may transmit the first data and/or perform measurement in the overlapping time period based on the remaining delay for transmitting the first data, thereby avoiding or reducing impact on transmission of the first data, and improving service reliability.

In a possible design, the first apparatus may send first information. The first information may indicate the remaining delay for transmitting the first data. In this way, a second apparatus that receives the first information may quickly and accurately determine the remaining delay for transmitting the first data.

Optionally, the first information is a delay status report (delay status report, DSR), so that the conventional DSR may be reused, and new information indicating the remaining delay does not need to be transmitted, thereby reducing signaling overheads.

In another possible design, the first apparatus receives second information; and determines, based on the second information, the remaining delay for transmitting the first data. According to this design, the first apparatus may quickly and accurately determine, based on the second information, the remaining delay for transmitting the first data.

In a possible design, the first apparatus may transmit the first data and/or perform measurement in the first time period based on the remaining delay in one of the following manners:

When the remaining delay is greater than or equal to a first threshold, the first apparatus performs measurement in the first time period. When the remaining delay for transmitting the first data is greater than or equal to the first threshold, it may be considered that the remaining time of the data is sufficient. In this manner, the first apparatus may preferentially perform measurement, so that measurement performance and quality of service of the first apparatus may be ensured, and the first data may be transmitted in time, thereby avoiding reducing service reliability.

When the remaining delay is greater than or equal to the first threshold, the first apparatus transmits the first data in a first part of the first time period, and performs measurement in a second part of the first time period. In this manner, the first apparatus not only performs measurement but also transmits the first data in the first time period, thereby avoiding or reducing impact on data transmission, and improving service reliability.

When the remaining delay is less than the first threshold, the first apparatus transmits the first data in the first time period. When the remaining delay for transmitting the first data is less than the first threshold, it may be considered that the remaining time of the data is tight. In this manner, the first apparatus may preferentially transmit data with a tight-delay requirement, thereby avoiding reducing service reliability.

In a possible design, the first threshold may be at least one of the following: preset; or indicated by received third information; or indicated by sent fourth information; or determined based on the first resource and/or a duration of the second time period. According to this design, the first apparatus may quickly and accurately determine the first threshold. In addition, if the first threshold is determined based on the first resource and/or the duration of the second time period, the determined first threshold may match a current scenario, thereby achieving a balance between measurement and data transmission.

In a possible design, the first part may be at least one of the following: preset; or indicated by received fifth information; or indicated by sent sixth information; or determined based on the remaining delay. According to this design, the first apparatus may quickly and accurately determine the first part. In addition, if the first part is determined based on the remaining delay, the determined first part may match the remaining delay, thereby achieving a balance between measurement and data transmission.

In a possible design, the second part may be at least one of the following: preset; or indicated by received seventh information; or indicated by sent eighth information; or determined based on a duration of the third time period and the remaining delay. According to this design, the first apparatus may quickly and accurately determine the second part. In addition, if the second part is determined based on the duration of the third time period and the remaining delay, the determined second part may match the remaining delay, thereby achieving a balance between measurement and data transmission.

**According to a second aspect**, an embodiment of this application provides a communication method. The method may be applied to a second apparatus. The second apparatus may be an access network device or a module (for example, a circuit, a chip, a chip system, or a processor) in the access network device, or may be a logical node, a logical module, or software that can implement all or a part of functions of the access network device. The method may include: The second apparatus may send configuration information. The configuration information may be used to configure at least one time period for performing measurement. Then, the second apparatus may determine whether a first time period is used for transmitting first data. The first time period may be an overlapping part of a second time period and a third time period, the second time period is one of the at least one time period, the third time period is a time period corresponding to a time domain position of a first resource, and the first resource is a scheduled or configured resource used for transmitting the first data.

According to the method, when the time period used for measurement overlaps with the time domain position of the resource used for transmitting the first data, the second apparatus may determine whether the overlapping time period is used for transmitting the first data. In this way, the second apparatus may perform, based on a determining result, a corresponding operation. For example, if the second apparatus determines that the overlapping time period is used for transmitting the first data, the second apparatus may transmit the first data in the overlapping time period, thereby avoiding or reducing impact on transmission of the first data, and improving service reliability. If the second apparatus determines that the overlapping time period is not used for transmitting the first data, the second apparatus may not detect a signal from a first apparatus in the overlapping time period, thereby reducing power consumption of the second apparatus.

In a possible design, the second apparatus may receive first information; and determine, based on the first information, a remaining delay for transmitting the first data. Then, the second apparatus may determine, based on the remaining delay, whether the first time period is used for transmitting the first data. According to this design, the second apparatus may quickly and accurately determine, based on the first information, the remaining delay for transmitting the first data.

Optionally, the first information may be a DSR, so that the conventional DSR may be reused, and new information indicating the remaining delay does not need to be transmitted, thereby reducing signaling overheads.

In another possible design, the second apparatus may send second information. The second information may indicate a remaining delay for transmitting the first data. The second apparatus may determine, based on the remaining delay, whether the first time period is used for transmitting the first data. According to this design, the first apparatus that receives the second information may quickly and accurately determine the remaining delay for transmitting the first data.

In a possible design, the second apparatus may determine, in one of the following manners, whether the first time period is used for transmitting the first data:

When the remaining delay for transmitting the first data is greater than or equal to a first threshold, the second apparatus may determine that the first time period is not used for transmitting the first data. When the remaining delay for transmitting the first data is greater than or equal to the first threshold, it may be considered that the remaining time of the data is sufficient. In this manner, the first time period may be preferentially used for performing measurement, so that measurement performance and quality of service of the first apparatus may be ensured, and the first data may be transmitted in time, thereby avoiding reducing service reliability. In addition, the second apparatus may perform, based on a determining result, a corresponding operation. For example, the second apparatus may not detect a signal from the first apparatus in the overlapping time period, thereby reducing power consumption of the second apparatus.

When the remaining delay is greater than or equal to the first threshold, the second apparatus may determine that a first part of the first time period is used for transmitting the first data, and a second part of the first time period is not used for transmitting the first data. In this manner, the first time period may not only be used for performing measurement, but also be used for transmitting the first data, thereby avoiding or reducing impact on data transmission, and improving service reliability. In addition, the second apparatus may perform, based on a determining result, a corresponding operation. For example, the second apparatus may transmit the first data in the first part, and does not detect the signal from the first apparatus in the second part, thereby reducing power consumption of the second apparatus.

When the remaining delay is less than the first threshold, the second apparatus may determine that the first time period is used for transmitting the first data. When the remaining delay for transmitting the first data is less than the first threshold, it may be considered that the remaining time of the data is tight. In this manner, data with a tight-delay requirement may be preferentially transmitted, thereby avoiding reducing service reliability. In addition, the second apparatus may perform, based on a determining result, a corresponding operation. For example, the second apparatus may transmit the first data in the overlapping time period, thereby avoiding impact on data transmission, and improving service reliability.

In a possible design, the first threshold may be at least one of the following: preset; or indicated by sent third information; or indicated by received fourth information; or determined based on the first resource and/or a duration of the second time period. According to this design, the second apparatus may quickly and accurately determine the first threshold. In addition, if the first threshold is determined based on the first resource and/or the duration of the second time period, the determined first threshold may match a current scenario, thereby achieving a balance between measurement and data transmission.

In a possible design, the first part may be at least one of the following: preset; or indicated by sent fifth information; or indicated by received sixth information; or determined based on the remaining delay. According to this design, the second apparatus may quickly and accurately determine the first part. In addition, if the first part is determined based on the remaining delay, the determined first part may match the remaining delay, thereby achieving a balance between measurement and data transmission.

In a possible design, the second part may be at least one of the following: preset; or indicated by sent seventh information; or indicated by received eighth information; or determined based on a duration of the third time period and the remaining delay. According to this design, the second apparatus may quickly and accurately determine the second part. In addition, if the second part is determined based on the duration of the third time period and the remaining delay, the determined second part may match the remaining delay, thereby achieving a balance between measurement and data transmission.

In a possible design, the second apparatus may determine, in one of the following manners, whether the first time period is used for transmitting the first data: when the first information is received, determining that the first time period is used for transmitting the first data, where the first information indicates the remaining delay for transmitting the first data; or when the first information is not received, determining that the first time period is not used for transmitting the first data. In this design, the second apparatus may determine, based on whether the first information is received, whether the first time period is used for transmitting the first data. In this way, the second apparatus may determine, without parsing specific content of the first information, whether the first time period is used for transmitting the first data, thereby improving a speed of determining whether the first time period is used for transmitting the first data, and saving compute resources of the second apparatus.

**According to a third aspect**, this application provides a communication apparatus. The communication apparatus may be a terminal or a module (for example, a circuit, a chip, a chip system, or a processor) in the terminal, or may be a logical node, a logical module, or software that can implement all or a part of functions of the terminal. The communication apparatus has a function of implementing the first aspect. For example, the communication apparatus includes a corresponding module, unit, or means for performing the operations in the first aspect. The module, the unit, or the means may be implemented by software, may be implemented by hardware, or may be implemented by hardware executing corresponding software.

In a possible design, the communication apparatus includes an interface unit and a processing unit. The interface unit may be configured to receive and/or send information, to implement communication between the communication apparatus and another apparatus. The processing unit may be configured to perform a part of internal operations of the communication apparatus. Functions performed by the processing unit and the interface unit may correspond to the operations in the first aspect.

In a possible design, the communication apparatus includes a processor, and the processor may be configured to be coupled to a memory. The memory may store a computer program or instructions necessary for implementing functions in the first aspect. The processor may execute the computer program or the instructions stored in the memory. When the computer program or the instructions are executed, the communication apparatus is caused to implement the method in any possible design of the first aspect.

In a possible design, the communication apparatus includes a processor and a memory. The memory may store a computer program or instructions necessary for implementing functions in the first aspect. The processor may execute the computer program or the instructions stored in the memory. When the computer program or the instructions are executed, the communication apparatus is caused to implement the method in any possible design of the first aspect.

In a possible design, the communication apparatus includes a processor and an interface circuit. The processor is configured to: communicate with another apparatus through the interface circuit, and perform the method in any possible design of the first aspect.

**According to a fourth aspect**, this application provides a communication apparatus. The communication apparatus may be an access network device or a module (for example, a circuit, a chip, a chip system, or a processor) in the access network device, or may be a logical node, a logical module, or software that can implement all or a part of functions of the access network device. The communication apparatus has a function of implementing the second aspect. For example, the communication apparatus includes a corresponding module, unit, or means for performing the operations in the second aspect. The module, the unit, or the means may be implemented by software, may be implemented by hardware, or may be implemented by hardware executing corresponding software.

In a possible design, the communication apparatus includes an interface unit and a processing unit. The interface unit may be configured to receive and/or send information, to implement communication between the communication apparatus and another apparatus. The processing unit may be configured to perform a part of internal operations of the communication apparatus. Functions performed by the processing unit and the interface unit may correspond to the operations in the second aspect.

In a possible design, the communication apparatus includes a processor, and the processor may be configured to be coupled to a memory. The memory may store a computer program or instructions necessary for implementing functions in the second aspect. The processor may execute the computer program or the instructions stored in the memory. When the computer program or the instructions are executed, the communication apparatus is caused to implement the method in any possible design of the second aspect.

In a possible design, the communication apparatus includes a processor and a memory. The memory may store a computer program or instructions necessary for implementing functions in the second aspect. The processor may execute the computer program or the instructions stored in the memory. When the computer program or the instructions are executed, the communication apparatus is caused to implement the method in any possible design of the second aspect.

In a possible design, the communication apparatus includes a processor and an interface circuit. The processor is configured to: communicate with another apparatus through the interface circuit, and perform the method in any possible design of the second aspect.

It may be understood that, in the third aspect or the fourth aspect, the processor may be implemented by hardware or software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors, and one or more memories. The memory may be integrated with the processor, or the memory and the processor are separately disposed. In a specific implementation process, the memory and the processor may be integrated on a same chip, or may be separately disposed on different chips. A type of the memory and a manner of disposing the memory and the processor are not limited in embodiments of this application.

**According to a fifth aspect**, this application provides a communication system. The communication system may include the communication apparatus according to the third aspect and the communication apparatus according to the fourth aspect. For example, the communication system includes a terminal and an access network device. The terminal is configured to perform the communication method according to the first aspect, and the access network device is configured to perform the communication method according to the second aspect.

**According to a sixth aspect**, this application provides a computer-readable storage medium. The computer storage medium stores a computer program or instructions. When the computer program or the instructions are executed, the method in any one of the possible designs of either the first aspect or the second aspect is implemented.

**According to a seventh aspect**, this application provides a computer program product. The computer program product includes computer program code. When the computer program code is run, the method in any one of the possible designs of either the first aspect or the second aspect is implemented.

**According to an eighth aspect**, this application provides a chip. The chip is configured to read a computer program stored in a memory, to perform the method in any one of the possible designs of either the first aspect or the second aspect.

For technical effects that can be achieved in any one of the third aspect to the eighth aspect, refer to descriptions of technical effects that can be achieved in any one of the possible designs of either the first aspect or the second aspect. Details are not described herein again.

### BRIEF DESCRIPTION OF DRAWINGS

FIG. 1 is a diagram of an architecture of a communication system according to an embodiment of this application;
FIG. 2 is a diagram of an application scenario according to an embodiment of this application;
FIG. 3 is a flowchart of a communication method according to an embodiment of this application;
FIG. 4 is a diagram of an MG according to an embodiment of this application;
FIG. 5 and FIG. 6 are diagrams of several application scenarios according to embodiments of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

The following describes technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system (for example, a long-term evolution (long-term evolution, LTE) system), a 5th generation (5th generation, 5G) mobile communication system (for example, a new radio (new radio, NR) system), and a future evolved communication system (for example, a 6th generation (6th generation, 6G) mobile communication system).

All aspects, embodiments, or features are presented in this application by describing a system that may include a plurality of devices, components, modules, and the like. It should be appreciated and understood that each system may include another device, component, module, and the like, and/or may not include all devices, components, modules, and the like described with reference to the accompanying drawings. In addition, a combination of these solutions may be used.

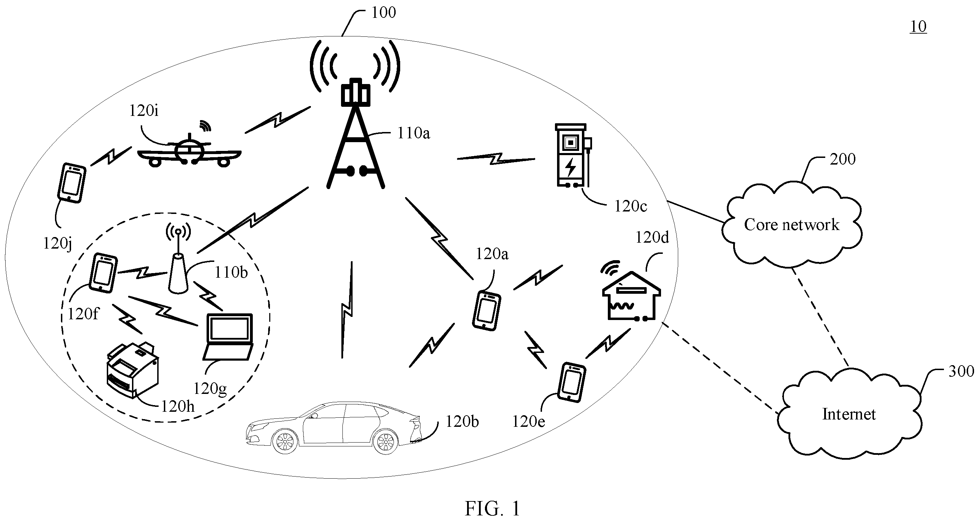

For ease of understanding embodiments of this application, FIG. 1 is a diagram of a possible and non-limiting system. As shown in FIG. 1, the communication system 10 includes a radio access network (radio access network, RAN) 100 and a core network (core network, CN) 200. Optionally, the communication system 10 may further include an internet 300.

The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). The RAN 100 may alternatively be an open radio access network (open RAN, O-RAN or ORAN), a cloud radio access network (cloud radio access network, CRAN), or a Wi-Fi system. The RAN 100 may alternatively be a communication system that integrates two or more of the foregoing systems.

The RAN node 110 may also be sometimes referred to as a RAN entity, an access node, or the like, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Both the RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

The RAN node may also have different expressions, for example, an access network device. In this application, unless otherwise specified, the access network device is used for expression.

In a possible scenario, the access network device may be a base station (base station), an evolved NodeB (evolved NodeB, eNodeB), an access point (access point, AP), a transmission reception point (transmission reception point, TRP), a next-generation NodeB (next-generation NodeB, gNB), a next-generation base station in a 6G mobile communication system, a base station in a future mobile communication system, an access node in a Wi-Fi system, or the like. The access network device may be a macro base station (for example, 110a in FIG. 1), a micro base station or an indoor station (for example, 110b in FIG. 1), a relay node or a donor node, or a radio controller in a CRAN scenario. Optionally, the access network device may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or a part of functions of the access network device in this application may alternatively be implemented by using a software function running on hardware, or may be implemented by using an instantiated virtualization function on a platform (for example, a cloud platform). The access network device in this application may alternatively be a logical node, a logical module, or software that can implement all or the part of the functions of the access network device.

In another possible scenario, a plurality of access network devices coordinate to assist the terminal in implementing radio access, and different access network devices separately implement a part of functions of a base station. For example, the access network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, in a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). Any one of the CU (or the CU-CP and the CU-UP), the DU, and the RU in this application may be implemented by using a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), internet of things (internet of things, IoT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A device form of the terminal is not limited in embodiments of this application.

In the following descriptions of this application, "sending information to a device (for example, a terminal)" may be understood as that a destination end of the information is the device, and may include directly or indirectly sending the information to the device. "Receiving information from a device (for example, a terminal)" or "receiving information that is from a device (for example, a terminal)" may be understood as that a source end of the information is the device, and may include directly or indirectly receiving the information from the device. Necessary processing, for example, a format change, may be performed on the information between the source end and the destination end to which the information is sent, but the destination end can understand valid information from the source end. A similar expression in this application may be understood similarly, and details are not described herein again.

The communication system and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following first explains and describes related terms in embodiments of this application. It should be noted that these explanations are intended to make embodiments of this application easier to understand, but should not be considered as a limitation on the protection scope claimed in this application.

### (1) Arrival periodicity of a data frame:

For a service such as XR, a data frame may be a video frame, an audio frame, or another possible frame. An example in which the data frame is a video frame is used. A video may be formed by consecutive images (pictures, photos, or the like) played in rapid succession. When 24 images are quickly played per second, human eyes consider that the images are consecutive pictures (namely, a video). A frame rate indicates a quantity of images played per second. For example, if the frame rate is 24 frames per second (frame per second, FPS), it indicates that 24 images are played per second; if the frame rate is 60 FPS, it indicates that 60 images are played per second; and so on.

Take an XR service as an example. A service model of the XR service is usually that data frames periodically arrive based on a frame rate. In other words, an arrival periodicity of the data frame is related to the frame rate. For example, when the frame rate is 60 FPS, the arrival periodicity of the data frame is 1000/60=50/3 milliseconds (ms), which is approximately equal to 16.67 ms. That is, one data frame arrives at an interval of 16.67 ms.

To meet a transmission periodicity requirement of the data frame, an access network device may schedule (or configure) uplink and downlink transmission resources used for transmitting the data frame for a terminal. There may be two scheduling manners: dynamic scheduling and semi-persistent scheduling. In dynamic scheduling, the access network device may send control information to the terminal through a control channel, to allocate a transmission parameter of a data channel to the terminal. The control channel is, for example, a physical downlink control channel (physical downlink control channel, PDCCH). The control information may be, for example, downlink control information (downlink control information, DCI). The data channel may be, for example, a physical downlink shared channel (physical downlink shared channel, PDSCH) or a physical uplink shared channel (physical uplink shared channel, PUSCH). For example, the control information may indicate a time-frequency position to which the data channel is mapped (for example, a time domain symbol or a frequency domain resource block (resource block, RB) to which the data channel is mapped), so that the access network device and the terminal may transmit downlink data (for example, data borne on the PDSCH) and/or uplink data (for example, data borne on the PUSCH) through the data channel at the time-frequency position.

### (2) Measurement performed by a terminal:

In a mobile cellular network, when a terminal moves from a cell to another cell, the terminal needs to perform an inter-cell handover. Before the handover, the terminal needs to measure a signal of a neighboring cell, to determine when to perform the handover. Measurement performed by the terminal may include intra-frequency measurement (intra-frequency measurement) and inter-frequency measurement (inter-frequency measurement). Intra-frequency measurement indicates that a cell on which the terminal currently camps and a target cell to be measured are on a same carrier frequency (or referred to as a center frequency). Inter-frequency measurement indicates that a cell on which the terminal currently camps and a target cell are not on a same carrier frequency. For inter-frequency measurement, 3GPP proposes an MG, that is, a part of time is reserved. In this period of time, the terminal may measure signals of the neighboring cell, but does not send or receive any data. The MG may be a periodical time period, and a periodicity of the MG is, for example, 20 ms, 40 ms, 80 ms, or 160 ms.

Optionally, measurement performed by the terminal may be based on a synchronization signal and physical broadcast channel (physical broadcast channel, PBCH) block (synchronization signal and PBCH block, SSB). SSBs are not continuous in time domain. Therefore, the terminal does not need to continuously search for and measure the SSBs in time domain, but performs an operation in a time window in which these SSBs can be captured. Therefore, an NR protocol introduces an SSB-based measurement timing configuration (SSB-based measurement timing configuration, SMTC), and the SMTC may be used to configure one measurement time window. An access network device may configure a corresponding SMTC for each to-be-measured frequency, so that the terminal may perform SSB measurement in a measurement time window configured by an SMTC of the frequency.

(3) **Remaining delay**: indicates a duration required for data transmission to be completed. For example, data 1 arrives at a buffer of a terminal at a 0^{th} millisecond (ms), and a packet delay budget (packet delay budget, PDB) of the data 1 is 10 ms. If a current moment is a 3^{rd} ms, a remaining delay for transmitting the data 1 is 10-3=7 ms.

It should be understood that the remaining delay may have another name, for example, remaining time, a remaining scheduling delay, remaining scheduling time, a remaining packet delay budget, or remaining transmission time, provided that the remaining delay represents a same meaning.

(4) **DSR**: may be used by a terminal to report information related to a data delay to an access network device.

Optionally, the DSR may be used to report a remaining delay of data in a logical channel group (logic channel group, LCG). For example, the DSR may be used to report a minimum remaining delay of data in an LCG. For example, if a remaining delay of data 1 in an LCG is 5 milliseconds (ms), and a remaining delay of data 2 in the LCG is 8 ms, the DSR may be used to report the remaining delay of the data 1 in the LCG. For example, the DSR may indicate 5 ms.

(5) In the following descriptions of this application, "greater than or equal to" may be replaced with "greater than"; and/or "less than" may be replaced with "less than or equal to".

(6) In the following descriptions of this application, uplink data may be data sent by a terminal to an access network device, and downlink data may be data sent by an access network device to a terminal.

(7) In the following descriptions of this application, "sending information to a device (for example, a terminal)" may be understood as that a destination end of the information is the device, and may include directly or indirectly sending the information to the device. "Receiving information that is from a device (for example, a terminal)" may be understood as that a source end of the information is the device, and may include directly or indirectly receiving the information from the device. Necessary processing, for example, a format change, may be performed on the information between the source end and the destination end to which the information is sent, but the destination end can understand valid information from the source end. A similar expression in this application may be understood similarly, and details are not described herein again.

As described above, in the XR service, the arrival periodicity of the data frame is related to the frame rate. A periodicity of a time period (for example, an MG) used for terminal measurement may be different from the arrival periodicity of the data frame, and is not an integer multiple of the arrival periodicity of the data frame. In this way, time domain positions of resources configured by the access network device for transmitting data frames may overlap with the time period (for example, an MG) used for terminal measurement. If the time period used for terminal measurement cannot be used for sending and receiving data, in the overlapping time period, the terminal may measure a signal of a neighboring cell, but does not send or receive data. Consequently, this affects data transmission and reduces service reliability.

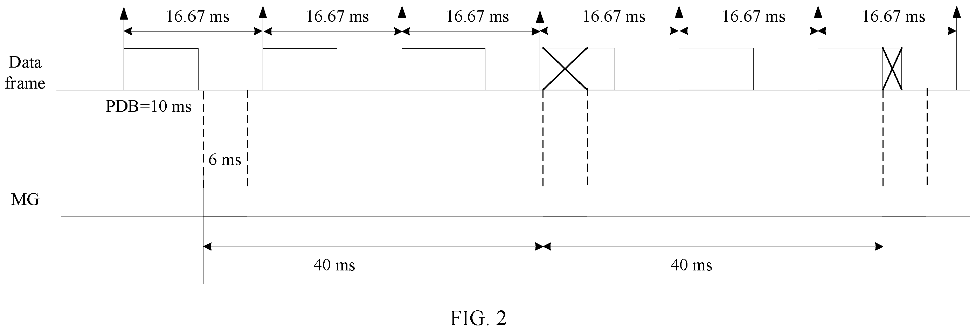

For example, as shown in FIG. 2, when the frame rate is 60 FPS, the arrival periodicity of the data frame is approximately equal to 16.67 ms. That is, one data frame arrives at an interval of 16.67 ms. A periodicity of the MG is 40 ms, and a length of each MG is 6 ms. Time domain positions of resources of two data frames in six data frames overlap with the MG. In an overlapping time period, the terminal may measure a signal of a neighboring cell, but does not send or receive data. Consequently, this affects data transmission and reduces service reliability.

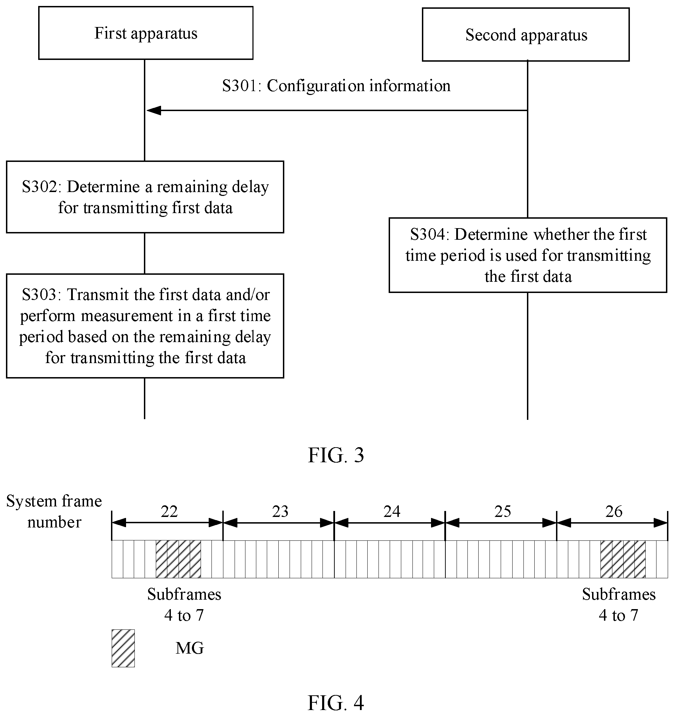

In view of this, an embodiment of this application provides a communication method. FIG. 3 is a schematic flowchart corresponding to a communication method according to an embodiment of this application. In FIG. 3, the method is illustrated by using an example in which a first apparatus and a second apparatus are used as execution bodies of interaction illustration. However, the execution bodies of the interaction illustration are not limited in this application. For example, the first apparatus may be a terminal, or may be a module used in the terminal, for example, a circuit, a chip, a chip system, or a processor, or may be a logical node, a logical module, or software that can implement all or a part of functions of the terminal. The second apparatus may be an access network device, or may be a module used in the access network device, for example, a circuit, a chip, a chip system, or a processor, or may be a logical node, a logical module, or software that can implement all or a part of functions of the access network device. As shown in FIG. 3, the method includes the following steps.

**S301**: The second apparatus sends configuration information; and correspondingly, the first apparatus receives the configuration information.

The configuration information may be used to configure at least one time period for performing measurement. The at least one time period may be a time period used for intra-frequency measurement, or may be a time period used for inter-frequency measurement. The at least one time period may be periodic or non-periodic. Duration of all time periods in the at least one time period may be the same or may be different. The following uses an example in which the at least one time period is a periodic time period and the duration of all the time periods in the at least one time period is the same for description.

Optionally, the configuration information is used to configure an offset, a length, and a periodicity of the at least one time period. The offset may be used to determine a start time-domain position (for example, a start system frame number and a start subframe position) for performing measurement. In other words, the offset may be used to determine a start time-domain position of a 1^{st} time period in the at least one time period. The length may be the duration (or duration) of each time period in the at least one time period. The periodicity may be a periodicity of the at least one time period.

In some examples, the configuration information includes an offset parameter (for example, a gap offset (gapOffset)), a length parameter (for example, a measurement gap length (measurement gap length, MGL)), and a periodicity parameter (for example, a measurement gap repetition period (measurement gap repetition period, MGRP)). The offset parameter may be used to configure the offset of the at least one time period, the length parameter may be used to configure the length of the at least one time period, and the periodicity parameter may be used to configure the periodicity of the at least one time period. Optionally, in this example, the at least one time period configured by the configuration information may be at least one MG. For example, as shown in FIG. 4, if the offset configured by the offset parameter is 24, the length configured by the length parameter is 4 ms, the periodicity configured by the periodicity parameter is 40 ms, and a relationship between the offset and the start system frame number as well as the start subframe position satisfies Formula 1, the at least one time period may include a subframe 4 to a subframe 7 in a system frame whose system frame number is 22, a subframe 4 to a subframe 7 in a system frame whose system frame number is 26, and a subframe 4 to a subframe 7 in a system frame whose system frame number is 26+n*4, where n is a positive integer. $\begin{matrix}SFN mod T = FLOOR \left(gapOffset/10\right) ; and \\ subframe = gapOffset mod 10 ;\end{matrix}$ (Formula 1), where $T = MGRP / 10 .$

SNF indicates the start system frame number, subframe indicates a subframe number at the start subframe position, mod represents a modulo operation, FLOOR represents a floor operation, gapOffset indicates the offset configured by the offset parameter, and MGRP indicates the periodicity configured by the periodicity parameter.

In some other examples, the configuration information includes a periodicity and offset (periodicityAndOffset) parameter and a duration (duration) parameter. The periodicity and offset parameter may indicate the periodicity and the offset of the at least one time period, and the duration may indicate the length of the at least one time period. Optionally, in this example, the at least one time period configured by the configuration information may be an SMTC. For example, if the offset configured by the periodicity and offset parameter is 24, the periodicity configured by the periodicity and offset parameter is 40 subframes, the length configured by the duration parameter is 2 subframes, and a relationship between the offset and the start system frame number as well as the start subframe position satisfies Formula 2, the at least one time period may include a subframe 4 and a subframe 5 in a system frame whose system frame number is 22, a subframe 4 and a subframe 5 in a system frame whose system frame number is 26, and a subframe 4 and a subframe 5 in a system frame whose system frame number is 26+n*4, where n is a positive integer. $\begin{matrix}SFN mod T = FLOOR \left(Offset/10\right) ; \\ if the periodicity \left(Periodicity\right) is greater than 5 subframes , subframe = Offset mod 10 ;\end{matrix}$ (Formula 2) or if the periodicity is less than or equal to 5 subframes, subframe=Offset or (Offset+5), where $T = CEIL \left(Periodicity/10\right) .$

SNF indicates the start system frame number, subframe indicates a subframe number at the start subframe position, Offset indicates the offset configured by the periodicity and offset parameter, Periodicity indicates the periodicity configured by the periodicity and offset parameter, mod represents a modulo operation, FLOOR represents a floor operation, and CEIL represents a ceiling operation.

It may be understood that the configuration information may be carried in a plurality of possible types of signaling. For example, the configuration information may be carried in physical-layer signaling such as downlink control information (downlink control information, DCI) or in higher-layer signaling such as a media access control (media access control, MAC) control element (control element, CE) or radio resource control (radio resource control, RRC) signaling.

**S302**: The first apparatus determines a remaining delay for transmitting first data.

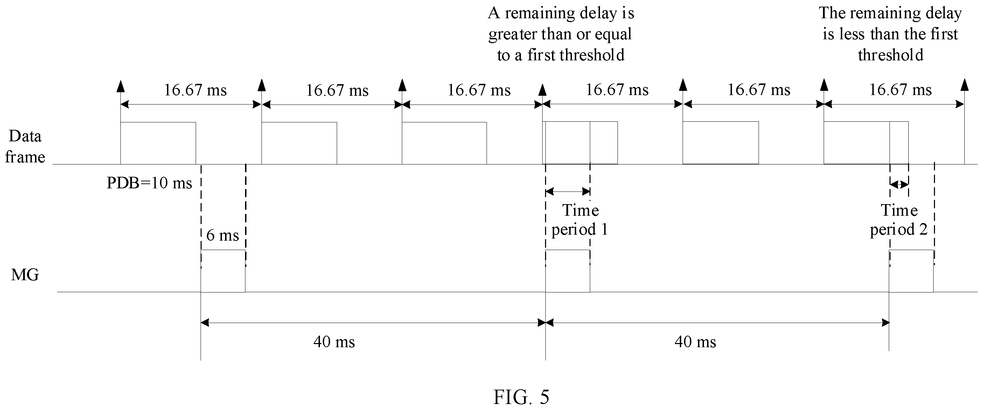

Optionally, the remaining delay for transmitting the first data may be a remaining delay for transmitting the first data at a first time. The first time may be related to a first time period. For example, the first time is the start time of the first time period. For another example, the first time is a sum of the start time of the first time period and a first offset value. The first offset value may be preset, for example, specified in a protocol; or the first offset value may be determined by the first apparatus; or the first offset value may be notified by another apparatus (for example, the second apparatus) to the first apparatus. The first time period may be an overlapping part of a second time period and a third time period, the second time period is one of the at least one time period configured by the configuration information, the third time period may be a time period corresponding to a time domain position of a first resource, and the first resource is a scheduled or configured resource used for transmitting the first data. For example, as shown in FIG. 5, the at least one time period is at least one MG. If the second time period is a 2^{nd} MG and the first resource is a scheduled or configured resource used for transmitting a 4^{th} data frame, the first time period is a time period 1; or if the second time period is a 3^{rd} MG and the first resource is a scheduled or configured resource used for transmitting a 6^{th} data frame, the first time period is a time period 2.

S302 may be implemented in a plurality of manners, for example, Manner a1 or Manner a2.

**Manner a1**: The first data is uplink data, and the first apparatus may independently determine the remaining delay for transmitting the first data. Optionally, the first apparatus may determine, based on time at which the first data arrives at a buffer of the first apparatus and a PDB of the first data, the remaining delay for transmitting the first data. For example, data 1 arrives at the buffer of the first apparatus at a 0^{th} ms, and a PDB of the data 1 is 10 ms. If the first time is a 3^{rd} ms, a remaining delay for transmitting the data 1 is 10-3=7 ms. Between the 0^{th} ms and the 3^{rd} ms, the first apparatus may transmit the first data, or may not transmit the first data.

In some possible manners, in Manner a1, the first apparatus may further send first information, where the first information indicates the remaining delay for transmitting the first data; and correspondingly, the second apparatus may receive the first information. Optionally, after receiving the first information, the second apparatus may determine, based on the first information, the remaining delay for transmitting the first data. In this manner, the second apparatus may quickly and accurately determine, based on the first information, the remaining delay for transmitting the first data.

The following uses an example to describe manners in which the first information indicates the remaining delay for transmitting the first data.

In some examples, the first information may explicitly indicate the remaining delay for transmitting the first data. For example, if a value of the first information is 7 and a unit is ms, it indicates that the remaining delay for transmitting the first data is 7 ms. For another example, the first apparatus and the second apparatus may store a correspondence between at least one index and at least one remaining delay. The correspondence may be presented, for example, in a form of a table. For example, the correspondence is shown in Table 1. The first information includes an index 1, indicating that the remaining delay for transmitting the first data is 1 ms. It should be understood that Table 1 is merely an example, and there may be more or fewer indexes and remaining delays in the correspondence. The at least one remaining delay corresponding to the at least one index may be an integer and/or a decimal. The correspondence may be preset, for example, specified in a protocol; or may be determined by the first apparatus or the second apparatus and notified to each other; or may be notified by another apparatus (for example, a core network device) to the first apparatus and the second apparatus.

**Table 1**

| Index | Remaining delay |
|---|---|
| 1 | 1 ms |
| 2 | 2 ms |
| 3 | 3 ms |
| 4 | 4 ms |
| 5 | 5 ms |

In some other examples, the first information may implicitly indicate the remaining delay for transmitting the first data. For example, the first information may include information that has a correspondence with the remaining delay for transmitting the first data. For example, the first information may include a first duration, the first duration is a difference between the time at which the first data arrives at the buffer of the first apparatus and the first time, and the first duration and the PDB of the first data may be used to determine the remaining duration for transmitting the first data. For example, if a value of the first information is 3, a unit is ms, and the PDB of the first data is 10 ms, it indicates that the remaining delay for transmitting the first data is 7 ms.

In some implementations, when the remaining delay for transmitting the first data is less than a second threshold, the first apparatus sends the first information. In this way, if the second apparatus receives the first information, the second apparatus may quickly determine that the remaining delay for transmitting the first data is less than the second threshold. In addition, in this implementation, if the remaining delay for transmitting the first data is greater than or equal to the second threshold, the first apparatus does not need to send the first information, thereby reducing signaling overheads. The second threshold may be preset, for example, specified in a protocol; or may be determined by the first apparatus; or may be notified by another apparatus (for example, the second apparatus) to the first apparatus.

Optionally, the first information may be a DSR. In this case, the first data may be data whose remaining delay in an LCG is less than the second threshold, and the second threshold may be a threshold corresponding to the LCG.

Optionally, the first apparatus may send the first information before the first time period. In this way, if the first apparatus determines to perform measurement in the first time period in S303, the first apparatus may successfully send the first information.

It may be understood that the first information may be carried in a plurality of possible types of signaling. For example, the first information may be carried in physical-layer signaling such as uplink control information (uplink control information, UCI) or in higher-layer signaling such as a MAC CE or RRC signaling. The first information may be carried in new physical-layer signaling such as UCI, or in new higher-layer signaling such as a MAC CE or RRC signaling, or may be carried in conventional physical-layer signaling such as UCI, or in conventional higher-layer signaling such as a MAC CE or RRC signaling.

**Manner a2**: The first data is downlink data. The second apparatus may send second information, where the second information may indicate the remaining delay for transmitting the first data; and correspondingly, the first apparatus may receive the second information, and determine, based on the second information, the remaining delay for transmitting the first data. For specific content of the second information indicating the remaining delay for transmitting the first data, refer to the description of the first information indicating the remaining delay for transmitting the first data in Manner a1. An only difference is that the first information is replaced with the second information, and the first apparatus is replaced with the second apparatus. Details are not described herein again.

Optionally, before sending the second information, the second apparatus may determine the remaining delay for transmitting the first data. For specific content, refer to the description that the first apparatus may independently determine the remaining delay for transmitting the first data in Manner a1. An only difference is that the first apparatus is replaced with the second apparatus. Details are not described herein again.

In some implementations, the second apparatus may send the second information before the first time period. In this way, the first apparatus may receive the second information, so that the remaining delay for transmitting the first data may be determined based on the second information, and S303 may be performed based on the remaining delay.

It may be understood that the second information may be carried in a plurality of possible types of signaling. For example, the second information may be carried in physical-layer signaling such as DCI or in higher-layer signaling such as a MAC CE or RRC signaling. The second information may be carried in new physical-layer signaling such as DCI, or in new higher-layer signaling such as a MAC CE or RRC signaling, or may be carried in conventional physical-layer signaling such as DCI, or in conventional higher-layer signaling such as a MAC CE or RRC signaling.

**S303**: The first apparatus transmits the first data and/or performs measurement in the first time period based on the remaining delay for transmitting the first data.

For specific content of the first time period, refer to the description of the first time period in S302. Details are not described herein again.

For example, if the first data is uplink data, the first apparatus may send the first data and/or perform measurement in the first time period based on the remaining delay for transmitting the first data. If the first data is downlink data, the first apparatus may receive the first data and/or perform measurement in the first time period based on the remaining delay for transmitting the first data.

Optionally, the first apparatus may transmit the first data and/or perform measurement in the first time period based on the remaining delay for transmitting the first data and a first threshold. The first threshold may be determined in a plurality of manners, which are described below.

In some possible manners, the first threshold may be preset, for example, specified in a protocol. In this way, the first apparatus may quickly determine the first threshold.

In some other possible manners, the first threshold may be determined by the first apparatus. For specific content of determining the first threshold by the first apparatus, refer to the following description that "the first threshold may be determined based on the first resource and/or a duration of the second time period". Details are not described herein. Optionally, after determining the first threshold, the first apparatus may send fourth information, where the fourth information indicates the first threshold; and correspondingly, the second apparatus may receive the fourth information, and determine the first threshold based on the fourth information. In this way, the second apparatus may obtain the first threshold in a timely manner. The fourth information may explicitly indicate the first threshold. For example, the fourth information includes the first threshold. Alternatively, the fourth information may implicitly indicate the first threshold. For example, the fourth information may include information that has a correspondence with the first threshold.

In still some possible manners, the second apparatus may send third information, where the third information indicates the first threshold; and correspondingly, the first apparatus may receive the third information, and determine the first threshold based on the third information. In this manner, the first apparatus may quickly and accurately determine the first threshold based on the third information from the second apparatus. For specific content of the third information indicating the first threshold, refer to the foregoing description of the fourth information indicating the first threshold. An only difference is that the fourth information is replaced with the third information. Details are not described herein again. Optionally, before sending the third information, the second apparatus may determine the first threshold. For specific content of determining the first threshold by the second apparatus, refer to the following description that "the first threshold may be determined based on the first resource and/or a duration of the second time period". Details are not described herein.

Optionally, the first threshold may be determined based on the first resource and/or a duration of the second time period. In this way, the preset first threshold may be determined based on the first resource and/or the duration of the second time period, or the first apparatus or the second apparatus may determine the first threshold based on the first resource and/or the duration of the second time period. For example, the first threshold is inversely proportional to a quantity of resources included in the first resource, that is, a larger quantity of resources included in the first resource indicates a smaller first threshold, and vice versa; and/or the first threshold is directly proportional to the duration of the second time period, that is, a longer duration of the second time period indicates a larger first threshold, and vice versa. In this manner, the determined first threshold may match a current scenario, thereby achieving a balance between measurement and data transmission. In this manner, the first threshold may be determined based on the first resource and/or the duration of the second time period. Therefore, that the first apparatus may transmit the first data and/or perform measurement in the first time period based on the remaining delay for transmitting the first data and the first threshold may be replaced with that the first apparatus may transmit the first data and/or perform measurement in the first time period based on the remaining delay for transmitting the first data and at least one of the following: the first resource and/or the duration of the second time period.

S303 may be implemented in a plurality of manners, for example, at least one of Manner b1 to Manner b3.

**Manner b1**: When the remaining delay for transmitting the first data is greater than or equal to the first threshold, the first apparatus may perform measurement in the first time period. In other words, when the remaining delay for transmitting the first data is greater than or equal to the first threshold, a priority of performing measurement is higher than a priority of transmitting the first data. For example, as shown in FIG. 5, the first time period is the time period 1. If the remaining delay for transmitting the first data is greater than or equal to the first threshold at start time of the time period 1, the first apparatus may perform measurement in the time period 1. When the remaining delay for transmitting the first data is greater than or equal to the first threshold, it may be considered that the remaining time of the data is sufficient, and the first data is transmitted after the first apparatus completes measurement, so that time for transmitting the first data can also meet a requirement of the PDB. Therefore, in Manner b1, the first apparatus may preferentially perform measurement, so that measurement performance and quality of service of the first apparatus may be ensured, and the first data may be transmitted in time, thereby avoiding reducing service reliability.

**Manner b2**: When the remaining delay for transmitting the first data is greater than or equal to the first threshold, the first apparatus may transmit the first data in a first part of the first time period, and perform measurement in a second part of the first time period. For example, as shown in FIG. 5, the first time period is the time period 1. If the remaining delay for transmitting the first data is greater than or equal to the first threshold at start time of the time period 1, the first apparatus may transmit data in a first part of the time period 1, and perform measurement in a second part of the time period 1. In Manner b2, the first apparatus not only performs measurement but also transmits the first data in the first time period, thereby avoiding affecting data transmission, and improving service reliability.

In Manner b2, the first part may be determined in a plurality of manners, which are described below.

In some possible manners, the first part may be preset, for example, specified in a protocol. For example, it is preset that the first part is a first half or a second half of the first time period. In this way, the first apparatus may quickly determine the first part.

In some other possible manners, the first part may be determined by the first apparatus. For specific content of determining the first part by the first apparatus, refer to the following description that "the first part may be determined based on the remaining delay for transmitting the first data". Details are not described herein. Optionally, after determining the first part, the first apparatus may send sixth information, where the sixth information indicates the first part; and correspondingly, the second apparatus may receive the sixth information, and determine the first part based on the sixth information. In this way, the second apparatus may obtain the first part in a timely manner. The sixth information may explicitly indicate the first part. For example, the sixth information includes the first part. Alternatively, the sixth information may implicitly indicate the first part. For example, the sixth information may include information that has a correspondence with the first part.

In still some possible manners, the second apparatus may send fifth information, where the fifth information indicates the first part; and correspondingly, the first apparatus may receive the fifth information, and determine the first part based on the fifth information. In this manner, the first apparatus may quickly and accurately determine the first part based on the fifth information from the second apparatus. For specific content of the fifth information indicating the first part, refer to the foregoing description of the sixth information indicating the first part. An only difference is that the sixth information is replaced with the fifth information. Details are not described herein again. Optionally, before sending the fifth information, the second apparatus may determine the first part. For specific content of determining the first part by the second apparatus, refer to the following description that "the first part may be determined based on the remaining delay for transmitting the first data". Details are not described herein.

Optionally, the first part may be determined based on the remaining delay for transmitting the first data. In this way, the preset first part may be determined based on the remaining delay for transmitting the first data, or the first apparatus or the second apparatus may determine the first part based on the remaining delay. For example, a duration of the first part is the remaining delay. The first apparatus may select, from the first time period, a part whose duration is the remaining delay as the first part. Optionally, start time of the first part may be the same as the start time of the first time period, or end time of the first part may be the same as end time of the first time period. In this manner, the determined first part matches the remaining delay, thereby achieving a balance between measurement and data transmission.

In Manner b2, the second part may be determined in a plurality of manners, which are described below.

In some possible manners, the second part may be preset, for example, specified in a protocol. For example, it is preset that the second part is a first half or a second half of the first time period. In this way, the first apparatus may quickly determine the second part.

In some other possible manners, the second part may be determined by the first apparatus. For specific content of determining the second part by the first apparatus, refer to the following description that "the second part may be determined based on a duration of the third time period and the remaining delay for transmitting the first data". Details are not described herein. Optionally, after determining the second part, the first apparatus may send eighth information, where the eighth information indicates the second part; and correspondingly, the second apparatus may receive the eighth information, and determine the second part based on the eighth information. In this way, the second apparatus may obtain the second part in a timely manner. The eighth information may explicitly indicate the second part. For example, the eighth information includes the second part. Alternatively, the eighth information may implicitly indicate the second part. For example, the eighth information may include information that has a correspondence with the second part.

In some other possible manners, the second apparatus may send seventh information, where the seventh information indicates the second part; and correspondingly, the first apparatus may receive the seventh information, and determine the second part based on the seventh information. In this manner, the first apparatus may quickly and accurately determine the first part based on the seventh information from the second apparatus. For specific content of the seventh information indicating the second part, refer to the foregoing description of the eighth information indicating the second part. An only difference is that the eighth information is replaced with the seventh information. Details are not described herein again. Optionally, before sending the seventh information, the second apparatus may determine the second part. For specific content of determining the second part by the second apparatus, refer to the following description that "the second part may be determined based on a duration of the third time period and the remaining delay for transmitting the first data". Details are not described herein.

Optionally, the second part may be determined based on a duration of the third time period and the remaining delay for transmitting the first data. In this way, the preset second part may be determined based on the duration of the third time period and the remaining delay for transmitting the first data; or the first apparatus or the second apparatus may determine the second part based on the duration of the third time period and the remaining delay. For example, a duration of the second part is a difference between the duration of the third time period and the remaining delay. The first apparatus may select, from the first time period, a part whose duration is the difference as the second part. Optionally, start time of the second part may be the same as the start time of the first time period, or end time of the second part may be the same as the end time of the first time period. In this manner, the determined second part matches the remaining delay, thereby achieving a balance between measurement and data transmission.

**Manner b3**: When the remaining delay for transmitting the first data is less than the first threshold, the first data is transmitted in the first time period. In other words, when the remaining delay for transmitting the first data is less than the first threshold, a priority of performing measurement is lower than a priority of transmitting the first data. For example, as shown in FIG. 5, the first time period is the time period 2. If the remaining delay for transmitting the first data is less than the first threshold at start time of the time period 2, the first apparatus may transmit the first data in the time period 2. When the remaining delay for transmitting the first data is less than the first threshold, it may be considered that the remaining time of the data is tight, the first data is transmitted after the first apparatus completes measurement, and time for transmitting the first data cannot meet a requirement of the PDB. Therefore, in Manner b3, the first apparatus may preferentially transmit data with a tight-delay requirement, thereby avoiding reducing service reliability.

**S304**: The second apparatus determines whether the first time period is used for transmitting the first data.

For example, if the first data is uplink data, the first apparatus may determine whether the first time period is used for transmitting the first data, and receive or not receive the first data based on a determining result. If the first data is downlink data, the first apparatus may determine whether the first time period is used for transmitting the first data, and send or not send the first data based on a determining result.

In some possible manners, the second apparatus may determine, based on the remaining delay for transmitting the first data, whether the first time period is used for transmitting the first data. In this manner, the second apparatus may determine the remaining delay for transmitting the first data. There are a plurality of determining manners, for example, Manner c1 or Manner c2.

**Manner c1**: The first data is uplink data. The first apparatus may send the first information (for example, a DSR), where the first information indicates the remaining delay for transmitting the first data; and correspondingly, the second apparatus may receive the first information, and determine, based on the first information, the remaining delay for transmitting the first data. For specific content of the first information, refer to the description of the first information in Manner a1. Details are not described herein again.

**Manner c2**: The first data is downlink data, and the second apparatus may independently determine the remaining delay for transmitting the first data. For specific content, refer to the description that the second apparatus may determine the remaining delay for transmitting the first data in Manner a2. Details are not described herein again.

As described above, the second apparatus may determine, based on the remaining delay for transmitting the first data, whether the first time period is used for transmitting the first data. There may be a plurality of determining manners, for example, at least one of Manner d1 to Manner d3.

**Manner d1**: When the remaining delay for transmitting the first data is greater than or equal to the first threshold, the second apparatus may determine that the first time period is not used for transmitting the first data. For specific content of the first threshold, refer to the description of the first threshold in S303. Details are not described herein again. For example, as shown in FIG. 5, the first time period is the time period 1. If the remaining delay for transmitting the first data is greater than or equal to the first threshold at the start time of the time period 1, the second apparatus may determine that the time period 1 is not used for transmitting the first data.

Optionally, Manner d1 and Manner b1 may be combined. Specifically, when the second apparatus determines, in Manner d1, that the first time period is not used for transmitting the first data, the first apparatus may perform measurement in the first time period in Manner b1. In this way, in the first time period, neither the first apparatus nor the second apparatus transmits the first data, so that behavior of the first apparatus is consistent with that of the second apparatus. The second apparatus may be prevented from sending the first data when the first apparatus does not receive the first data, thereby avoiding a waste of resources. In addition, the second apparatus may be prevented from listening to data when the first apparatus does not send the first data, thereby reducing power consumption of the second apparatus.

**Manner d2**: When the remaining delay for transmitting the first data is greater than or equal to the first threshold, the second apparatus may determine that the first part of the first time period is used for transmitting the first data, and the second part of the first time period is not used for transmitting the first data. In this way, the second apparatus may transmit the first data in the first part, and may not transmit the first data in the second part. For specific content of the first threshold, refer to the description of the first threshold in S303. For specific content of the first part and the second part, respectively refer to the descriptions of the first part and the second part in Manner b2. Details are not described herein again. For example, as shown in FIG. 5, the first time period is the time period 1. If the remaining delay for transmitting the first data is greater than or equal to the first threshold at the start time of the time period 1, the second apparatus may determine that the first part of the time period 1 is used for transmitting the first data, and the second part of the time period 1 is not used for transmitting the first data.

Optionally, Manner d2 and Manner b2 may be combined. Specifically, when the second apparatus determines, in Manner d2, that the first part of the first time period is used for transmitting the first data and the second part of the first time period is not used for transmitting the first data, the first apparatus may transmit the first data in the first part of the first time period and perform measurement in the second part of the first time period in Manner b2. In this way, in the first time period, behavior of the first apparatus is consistent with that of the second apparatus. The second apparatus may be prevented from sending the first data when the first apparatus does not receive the first data, thereby avoiding a waste of resources. In addition, the second apparatus may be prevented from listening to data when the first apparatus does not send the first data, thereby reducing power consumption of the second apparatus.

**Manner d3**: When the remaining delay for transmitting the first data is less than the first threshold, the second apparatus may determine that the first time period is used for transmitting the first data. For specific content of the first threshold, refer to the description of the first threshold in S303. Details are not described herein again. For example, as shown in FIG. 5, the first time period is the time period 2. If the remaining delay for transmitting the first data is less than the first threshold at the start time of the time period 2, the second apparatus may determine that the time period 2 is used for transmitting the first data.

Optionally, Manner d3 and Manner b3 may be combined. Specifically, when the second apparatus determines, in Manner d3, that the first time period is used for transmitting the first data, the first apparatus may transmit the first data in the first time period in Manner b3. In this way, in the first time period, behavior of the first apparatus is consistent with that of the second apparatus, so that the first data may be transmitted between the first apparatus and the second apparatus.

In some other possible manners, the second apparatus may determine, based on whether the first information is received, whether the first time period is used for transmitting the first data. In this way, the second apparatus may determine, without parsing specific content of the first information, whether the first time period is used for transmitting the first data, thereby improving a speed of determining whether the first time period is used for transmitting the first data, and saving compute resources of the second apparatus. For specific content of the first information, refer to the description of the first information in Manner a1. Details are not described herein again. Optionally, in this manner, when the remaining delay for transmitting the first data is less than the second threshold, the first apparatus sends the first information. For specific content of the second threshold, refer to the description of the second threshold in Manner a1. Details are not described herein again. In this manner, the first data may be uplink data.

The second apparatus may determine, based on whether the first information is received, whether the first time period is used for transmitting the first data. There may be a plurality of determining manners, for example, at least one of Manner e1 and Manner e2.

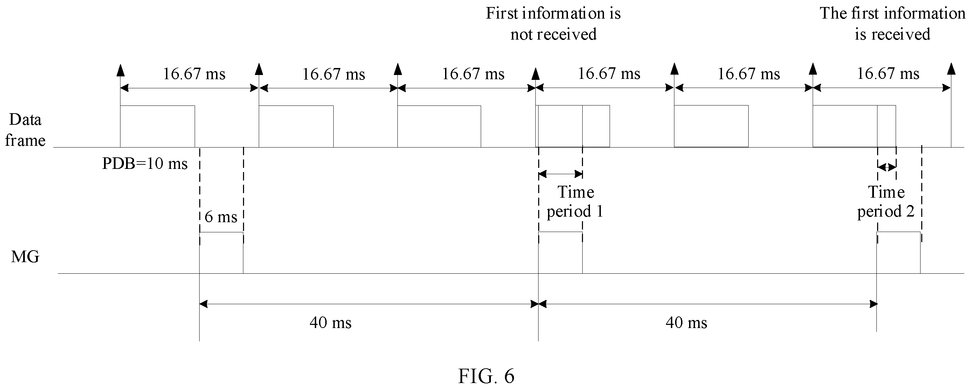

**Manner e1**: When the first information is received, the second apparatus may determine that the first time period is used for transmitting the first data. For example, as shown in FIG. 6, the first time period is the time period 2. If the remaining delay for transmitting the first data is less than the second threshold at the start time of the time period 2, the first apparatus may send the first information, and the second apparatus may determine that the time period 2 is used for transmitting the first data.

Optionally, the second threshold is less than or equal to the first threshold. In this way, if the remaining delay for transmitting the first data is less than the second threshold, the remaining delay is also less than the first threshold. In this case, the first apparatus may send the first data in the first time period in Manner b3; and correspondingly, the second apparatus may receive the first data in the first time period in Manner e1. In this way, in the first time period, behavior of the first apparatus is consistent with that of the second apparatus, so that the first data may be transmitted between the first apparatus and the second apparatus.

**Manner e2**: When the first information is not received, the second apparatus may determine that the first time period is not used for transmitting the first data. For example, as shown in FIG. 6, the first time period is the time period 1. If the remaining delay for transmitting the first data is greater than or equal to the second threshold at the start time of the time period 1, the first apparatus may not send the first information, and the second apparatus may determine that the time period 1 is not used for transmitting the first data.

Optionally, the second threshold is greater than or equal to the first threshold. In this way, if the remaining delay for transmitting the first data is greater than or equal to the second threshold, the remaining delay is also greater than or equal to the first threshold, and the first apparatus may perform measurement in the first time period in Manner b1; and correspondingly, the second apparatus may not receive the first data in the first time period in Manner e2. In this way, in the first time period, neither the first apparatus nor the second apparatus transmits the first data, so that behavior of the first apparatus is consistent with that of the second apparatus. The second apparatus may be prevented from sending the first data when the first apparatus does not receive the first data, thereby avoiding a waste of resources. In addition, the second apparatus may be prevented from listening to data when the first apparatus does not send the first data, thereby reducing power consumption of the second apparatus.

According to the method shown in FIG. 3, when the time period used for measurement overlaps with the time domain position of the resource used for transmitting the first data, the first apparatus may transmit the first data and/or perform measurement in the overlapping time period based on the remaining delay for transmitting the first data, thereby avoiding or reducing impact on transmission of the first data, and improving service reliability.

In some possible manners, S303 may be replaced with the following: the first apparatus transmits the first data in the first time period; and S304 may be replaced with the following: the second apparatus transmits the first data in the first time period. For example, the first time period is the time period 1 shown in FIG. 5. If the first data is uplink data, the first apparatus may send the first data in the time period 1; and correspondingly, the second apparatus may receive the first data in the time period 1. If the first data is downlink data, the second apparatus may send the first data in the time period 1; and correspondingly, the first apparatus may receive the first data in the time period 1. According to the method, when the time period used for measurement overlaps with the time domain position of the resource used for transmitting the first data, the first apparatus and the second apparatus may transmit the first data in the overlapping time period, thereby avoiding or reducing impact on transmission of the first data, and improving service reliability.

Based on a same technical concept as the foregoing method embodiment, an embodiment of this application provides a corresponding communication apparatus, and the communication apparatus may be configured to perform functions of related steps in the foregoing method embodiment. The function may be implemented by hardware, may be implemented by software, or may be implemented by hardware executing corresponding software. The hardware or the software includes one or more modules corresponding to the function. The communication apparatus may be a terminal, or may be a module (for example, a circuit or a chip) in the terminal, or may be a logical node, a logical module, or software that can implement all or a part of functions of the terminal or an access network device. Alternatively, the communication apparatus may be an access network device, or may be a module (for example, a circuit or a chip) in the access network device, or may be a logical node, a logical module, or software that can implement all or a part of functions of the access network device.

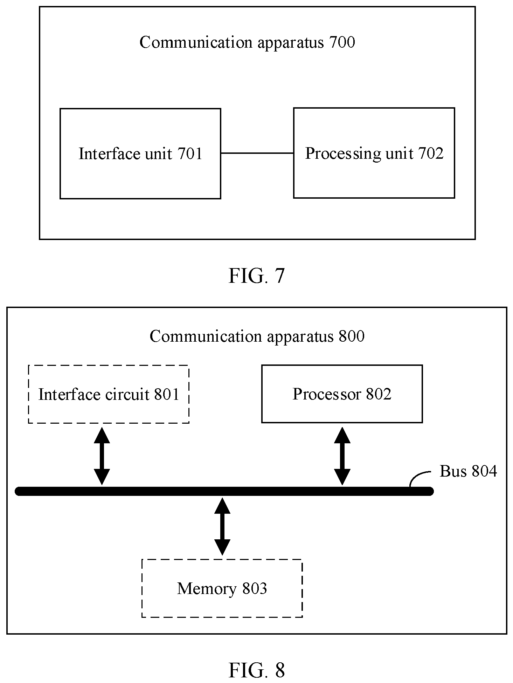

In a possible implementation, a structure of the communication apparatus provided in this embodiment of this application is shown in FIG. 7, and the communication apparatus includes an interface unit 701 and a processing unit 702. The following describes functions of various units in the communication apparatus 700.

The interface unit 701 is configured to input and/or output information. Inputting information may be replaced with receiving information, and outputting information may be replaced with sending information. When outputting the information, the interface unit 701 may output the information to an apparatus other than the communication apparatus 700, or may output the information to another unit in the communication apparatus 700. In some manners, the interface unit 701 may be implemented through at least one of a physical interface, a communication module, a communication interface, and an input/output interface. In some other manners, the interface unit 701 may be implemented through an interface circuit, for example, a mobile communication module. The mobile communication module may include one or more of at least one antenna, at least one filter, a switch, a power amplifier, a low noise amplifier (low noise amplifier, LNA), and the like.

The processing unit 702 may be configured to support the communication apparatus 700 in performing a processing action in the foregoing method embodiment. The processing unit 702 may be implemented by using one or more processors. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

In an implementation, the communication apparatus 700 is used in the first apparatus shown in FIG. 3 in embodiments of this application. The following describes specific functions of the processing unit 702 in this implementation.

The processing unit 702 is configured to: receive configuration information through the interface unit 701, where the configuration information is used to configure at least one time period for performing measurement; determine a remaining delay for transmitting first data; and transmit the first data and/or perform measurement in a first time period through the interface unit 701 based on the remaining delay, where the first time period is an overlapping part of a second time period and a third time period, the second time period is one of the at least one time period, the third time period is a time period corresponding to a time domain position of a first resource, and the first resource is a scheduled or configured resource used for transmitting the first data.

In some possible manners, the processing unit 702 is further configured to send first information through the interface unit 701, and the first information indicates the remaining delay.

In some other possible manners, the processing unit 702 is configured to: receive second information through the interface unit 701; and determine, based on the second information, the remaining delay for transmitting the first data.

In some implementations, the processing unit 702 is configured to: when the remaining delay is greater than or equal to a first threshold, perform measurement in the first time period; or
when the remaining delay is greater than or equal to the first threshold, transmit the first data in a first part of the first time period through the interface unit 701, and perform measurement in a second part of the first time period; or
when the remaining delay is less than the first threshold, transmit the first data in the first time period through the interface unit 701.

In an implementation, the communication apparatus 700 is used in the second apparatus shown in FIG. 3 in embodiments of this application. The following describes specific functions of the processing unit 702 in this implementation.

The processing unit 702 is configured to: send configuration information through the interface unit 701, where the configuration information is used to configure at least one time period for performing measurement; and determine whether a first time period is used for transmitting first data, where the first time period is an overlapping part of a second time period and a third time period, the second time period is one of the at least one time period, the third time period is a time period corresponding to a time domain position of a first resource, and the first resource is a scheduled or configured resource used for transmitting the first data.

In some possible manners, the processing unit 702 is configured to: receive first information through the interface unit 701; determine, based on the first information, a remaining delay for transmitting the first data; and determine, based on the remaining delay, whether the first time period is used for transmitting the first data.

In some other possible manners, the processing unit 702 is configured to: send second information through the interface unit 701, where the second information indicates a remaining delay for transmitting the first data; and determine, based on the remaining delay, whether the first time period is used for transmitting the first data.

In some implementations, the processing unit 702 is configured to: when the remaining delay for transmitting the first data is greater than or equal to a first threshold, determine that the first time period is not used for transmitting the first data; or
when the remaining delay is greater than or equal to the first threshold, determine that a first part of the first time period is used for transmitting the first data, and a second part of the first time period is not used for transmitting the first data; or
when the remaining delay is less than the first threshold, determine that the first time period is used for transmitting the first data.

In some other implementations, the processing unit 702 is configured to: when the first information is received, determine that the first time period is used for transmitting the first data, where the first information indicates the remaining delay for transmitting the first data; or
when the first information is not received, determine that the first time period is not used for transmitting the first data.

For more detailed descriptions of the processing unit 702 and the interface unit 701, directly refer to the related descriptions in the method embodiment in FIG. 3. Details are not described herein again.

It should be noted that, in the foregoing embodiments of this application, division into the modules is an example, is merely logical function division, and may be other division during actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the foregoing integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of software product. The computer software product is stored in a storage medium and includes several instructions for instructing a computer device (which may be a personal computer, a server, a network device, or the like) or a processor (processor) to perform all or a part of the steps of the methods described in embodiments of this application. The foregoing storage medium includes various media that may store program code, such as a USB flash drive, a removable hard disk, a read-only memory (read-only memory, ROM), a random access memory (random access memory, RAM), a magnetic disk, or an optical disc.

In a possible implementation, for a communication apparatus provided in an embodiment of this application, refer to FIG. 8. The communication apparatus 800 includes a processor 802. Optionally, the communication apparatus 800 further includes an interface circuit 801 and a memory 803. The interface circuit 801, the processor 802, and the memory 803 are coupled to each other.

Optionally, the interface circuit 801, the processor 802, and the memory 803 are coupled to each other through a bus 804. The bus 804 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 8, but this does not mean that there is only one bus or only one type of bus.

The interface circuit 801 is configured to input and/or output information. Inputting information may be replaced with receiving information, and outputting information may be replaced with sending information. When outputting the information, the interface circuit 801 may output the information to an apparatus other than the communication apparatus 800, or may output the information to another unit in the communication apparatus 800. For example, the interface circuit 801 may be implemented through at least one of a physical interface, a communication module, a communication interface, an input/output interface, and a mobile communication module. The mobile communication module may include one or more of at least one antenna, at least one filter, a switch, a power amplifier, an LNA, and the like.

The processor 802 may be configured to support the communication apparatus 800 in performing a processing action in the foregoing method embodiment. When the communication apparatus 800 is configured to implement the foregoing method embodiment, the processor 802 may be further configured to implement a function of the processing unit 702. The processor 802 may be a CPU, or may be another general-purpose processor, a DSP, an ASIC, an FPGA or another programmable logic device, a transistor logic device, a hardware component, or any combination thereof. The general-purpose processor may be a microprocessor or any conventional processor.

In an implementation, the communication apparatus 800 is used in the first apparatus shown in FIG. 3 in embodiments of this application. The following describes specific functions of the processor 802 in this implementation.

The processor 802 is configured to: receive configuration information through the interface circuit 801, where the configuration information is used to configure at least one time period for performing measurement; determine a remaining delay for transmitting first data; and transmit the first data and/or perform measurement in a first time period through the interface circuit 801 based on the remaining delay, where the first time period is an overlapping part of a second time period and a third time period, the second time period is one of the at least one time period, the third time period is a time period corresponding to a time domain position of a first resource, and the first resource is a scheduled or configured resource used for transmitting the first data.

In an implementation, the communication apparatus 800 is used in the second apparatus shown in FIG. 3 in embodiments of this application. The following describes specific functions of the processor 802 in this implementation.

The processor 802 is configured to: send configuration information through the interface circuit 801, where the configuration information is used to configure at least one time period for performing measurement; and determine whether a first time period is used for transmitting first data, where the first time period is an overlapping part of a second time period and a third time period, the second time period is one of the at least one time period, the third time period is a time period corresponding to a time domain position of a first resource, and the first resource is a scheduled or configured resource used for transmitting the first data.

For a specific function of the processor 802, refer to the descriptions in the communication method provided in the foregoing embodiments of this application and the instances, and the specific function descriptions of the communication apparatus 700 in FIG. 7 in embodiments of this application. Details are not described herein again.

The memory 803 is configured to store program instructions, data, and/or the like. Specifically, the program instructions may include program code, and the program code includes computer operation instructions. The memory 803 may include a RAM, and may further include a non-volatile memory (non-volatile memory), for example, at least one magnetic disk storage. The processor 802 executes the program instructions stored in the memory 803, and implements the foregoing function by using the data stored in the memory 803, to implement the communication method provided in the foregoing embodiments of this application. The memory 803 may be integrated with the processor 802, or may be a memory outside the communication apparatus.

It may be understood that the memory 803 in FIG. 8 in this application may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memories of the systems and methods described in this specification include but are not limited to these memories and any memory of another proper type.

Based on the foregoing embodiments, an embodiment of this application further provides a computer program product including computer-executable instructions. When the computer program product is run, the method provided in the foregoing embodiments is enabled to be performed.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to the devices in the foregoing embodiments. In a possible design, the chip system further includes a memory, and the memory is configured to store a program and data that are necessary for the computer apparatus. The chip system may include a chip, or may include a chip and another discrete device.

In embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

In this application, "at least one" means one or more, and "a plurality of" means two or more. The term "and/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" usually indicates an "or" relationship between associated objects. In the formula descriptions of this application, the character "/" usually indicates a "division" relationship between associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
receiving configuration information, wherein the configuration information is used to configure at least one time period for performing measurement;
determining a remaining delay for transmitting first data; and
transmitting the first data and/or performing measurement in a first time period based on the remaining delay, wherein the first time period is an overlapping part of a second time period and a third time period, the second time period is one of the at least one time period, the third time period is a time period corresponding to a time domain position of a first resource, and the first resource is a scheduled or configured resource used for transmitting the first data.

2. The method according to claim 1, wherein the method further comprises:
sending first information, wherein the first information indicates the remaining delay.

3. The method according to claim 2, wherein the first information is a delay status report DSR.

4. The method according to claim 1, wherein determining the remaining delay for transmitting the first data comprises:
receiving second information; and
determining, based on the second information, the remaining delay for transmitting the first data.

5. The method according to any one of claims 1 to 4, wherein transmitting the first data and/or performing measurement in the first time period based on the remaining delay comprises:
when the remaining delay is greater than or equal to a first threshold, performing measurement in the first time period; or
when the remaining delay is greater than or equal to the first threshold, transmitting the first data in a first part of the first time period, and performing measurement in a second part of the first time period; or
when the remaining delay is less than the first threshold, transmitting the first data in the first time period.

6. The method according to claim 5, wherein the first threshold is at least one of the following:
preset; or
indicated by received third information; or
indicated by sent fourth information; or
determined based on the first resource and/or a duration of the second time period.

7. The method according to claim 5 or 6, wherein the first part is at least one of the following:
preset; or
indicated by received fifth information; or
indicated by sent sixth information; or
determined based on the remaining delay.

8. The method according to any one of claims 5 to 7, wherein the second part is at least one of the following:
preset; or
indicated by received seventh information; or
indicated by sent eighth information; or
determined based on a duration of the third time period and the remaining delay.

9. A communication method, comprising:
sending configuration information, wherein the configuration information is used to configure at least one time period for performing measurement; and
determining whether a first time period is used for transmitting first data, wherein the first time period is an overlapping part of a second time period and a third time period, the second time period is one of the at least one time period, the third time period is a time period corresponding to a time domain position of a first resource, and the first resource is a scheduled or configured resource used for transmitting the first data.

10. The method according to claim 9, wherein determining whether the first time period is used for transmitting the first data comprises:
receiving first information;
determining, based on the first information, a remaining delay for transmitting the first data; and
determining, based on the remaining delay, whether the first time period is used for transmitting the first data.

11. The method according to claim 10, wherein the first information is a delay status report DSR.

12. The method according to claim 9, wherein the method further comprises:
sending second information, wherein the second information indicates a remaining delay for transmitting the first data; and
determining whether the first time period is used for transmitting the first data comprises:
determining, based on the remaining delay, whether the first time period is used for transmitting the first data.

13. The method according to any one of claims 9 to 12, wherein determining whether the first time period is used for transmitting the first data comprises:
when the remaining delay for transmitting the first data is greater than or equal to a first threshold, determining that the first time period is not used for transmitting the first data; or
when the remaining delay is greater than or equal to the first threshold, determining that a first part of the first time period is used for transmitting the first data, and a second part of the first time period is not used for transmitting the first data; or
when the remaining delay is less than the first threshold, determining that the first time period is used for transmitting the first data.

14. The method according to claim 13, wherein the first threshold is at least one of the following:
preset; or
indicated by sent third information; or
indicated by received fourth information; or
determined based on the first resource and/or a duration of the second time period.

15. The method according to claim 13 or 14, wherein the first part is at least one of the following:
preset; or
indicated by sent fifth information; or
indicated by received sixth information; or
determined based on the remaining delay.

16. The method according to any one of claims 13 to 15, wherein the second part is at least one of the following:
preset; or
indicated by sent seventh information; or
indicated by received eighth information; or
determined based on a duration of the third time period and the remaining delay.

17. The method according to any one of claims 9 to 11, wherein determining whether the first time period is used for transmitting the first data comprises:
when the first information is received, determining that the first time period is used for transmitting the first data, wherein the first information indicates the remaining delay for transmitting the first data; or
when the first information is not received, determining that the first time period is not used for transmitting the first data.

18. A communication apparatus, comprising:
an interface unit, configured to receive and/or send information; and
a processing unit, configured to: receive configuration information through the interface unit, wherein the configuration information is used to configure at least one time period for performing measurement; determine a remaining delay for transmitting first data; and transmit the first data and/or perform measurement in a first time period through the interface unit based on the remaining delay, wherein the first time period is an overlapping part of a second time period and a third time period, the second time period is one of the at least one time period, the third time period is a time period corresponding to a time domain position of a first resource, and the first resource is a scheduled or configured resource used for transmitting the first data.

19. The apparatus according to claim 18, wherein the processing unit is further configured to send first information through the interface unit, and the first information indicates the remaining delay.

20. The apparatus according to claim 19, wherein the first information is a delay status report DSR.

21. The apparatus according to claim 18, wherein the processing unit is configured to: receive second information through the interface unit; and determine, based on the second information, the remaining delay for transmitting the first data.

22. The apparatus according to any one of claims 18 to 21, wherein the processing unit is further configured to:
when the remaining delay is greater than or equal to a first threshold, perform measurement in the first time period; or
when the remaining delay is greater than or equal to the first threshold, transmit the first data in a first part of the first time period through the interface unit, and perform measurement in a second part of the first time period; or
when the remaining delay is less than the first threshold, transmit the first data in the first time period through the interface unit.

23. The apparatus according to claim 22, wherein the first threshold is at least one of the following:
preset; or
indicated by received third information; or
indicated by sent fourth information; or
determined based on the first resource and/or a duration of the second time period.

24. The apparatus according to claim 22 or 23, wherein the first part is at least one of the following:
preset; or
indicated by received fifth information; or
indicated by sent sixth information; or
determined based on the remaining delay.

25. The apparatus according to any one of claims 22 to 24, wherein the second part is at least one of the following:
preset; or
indicated by received seventh information; or
indicated by sent eighth information; or
determined based on a duration of the third time period and the remaining delay.

26. A communication apparatus, comprising a unit configured to perform the method according to any one of claims 9 to 17.

27. A communication apparatus, comprising a processor, wherein the processor executes instructions, to cause the apparatus to perform the method according to any one of claims 1 to 8, or to cause the apparatus to perform the method according to any one of claims 9 to 17.

28. A computer-readable storage medium, wherein the computer-readable storage medium stores a computer program or instructions; and when the computer program or the instructions are executed, the method according to any one of claims 1 to 17 is implemented.

29. A computer program product, wherein the computer program product comprises computer program code; and when the computer program code is run, the method according to any one of claims 1 to 17 is implemented.
